**Europäisches Patentamt**

**European Patent Office**

**Office européen des brevets**

(19)

(11) Veröffentlichungsnummer: **0 289 499 B1**

(12) **EUROPÄISCHE PATENTSCHRIFT**

(45) Veröffentlichungstag der Patentschrift:
02.05.91 Patentblatt 91/18

(51) Int. Cl.$^5$: **G01N 25/08**

(21) Anmeldenummer: **87900131.1**

(22) Anmeldetag: **17.12.86**

(86) Internationale Anmeldenummer:
**PCT/EP86/00758**

(87) Internationale Veröffentlichungsnummer:
**WO 87/04249 16.07.87 Gazette 87/15**

(54) **VERFAHREN UND VORRICHTUNG ZUR BESTIMMUNG DER SIEDETEMPERATUR.**

(30) Priorität: **13.01.86 DE 3600710**
**14.11.86 DE 3638977**

(43) Veröffentlichungstag der Anmeldung:
**09.11.88 Patentblatt 88/45**

(45) Bekanntmachung des Hinweises auf die
Patenterteilung:
**02.05.91 Patentblatt 91/18**

(84) Benannte Vertragsstaaten:
**AT BE CH DE FR GB IT LI LU NL SE**

(56) Entgegenhaltungen:
**DE-A- 1 598 649**
**US-A- 3 119 250**
**IBM Technical Disclosure Bulletin, vol. 13, No. 8, January 1971, (New York, US) N.G. Aakalu et al., "Float Type Boiling Point Sensor" ,page 2402**

(72) Erfinder: **LOHBERG, Peter**
**Am Ringelsberg 7**
**W-6382 Friedrichsdorf (DE)**
Erfinder: **MAY, Arno**
**Ludwig-Prandtl-Strasse 41**
**W-3400 Göttingen (DE)**
Erfinder: **KRAUSE, Hans, Joachim**
**Am Burggraben 25**
**W-3400 Göttingen (DE)**
Erfinder: **OBERDORFER, Dietmar**
**Brüsselstrasse 13 d**
**W-3400 Göttingen (DE)**
Erfinder: **PLÜQUETT, Ulrich**
**Kalklage 1e**
**W-3400 Göttingen (DE)**

(74) Vertreter: **Blum, Klaus-Dieter, Dipl.-Ing.**
**c/o ALFRED TEVES GMBH Guerickestrasse 7**
**W-6000 Frankfurt/Main 90 (DE)**

(73) Patentinhaber: **ALFRED TEVES GMBH**
**Guerickestrasse 7**
**W-6000 Frankfurt/Main 90 (DE)**
Patentinhaber: **PHYWE SYSTEME GMBH**
**Robert-Bosch-Breite 10**
**W-3400 Göttingen (DE)**

## Beschreibung

Die Erfindung bezieht sich auf ein Verfahren zur Bestimmung der Siedetemperatur einer Flüssigkeit, wie einer hygroskopischen Flüssigkeit, mit Hilfe einer Meßzelle, die mit der Umgebung verbunden ist und die ein Temperaturmeßelement enthält, und auf eine vorrichtung zur Durchführung des Verfahrens.

Die Bestimmung der Siedetemperatur ist z.B. zur Ermittlung und Überwachung des Zustandes einer hygroskopischen Kraftfahrzeug-Bremsflüssigkeit erforderlich. Durch die unvermeidliche Aufnahme von Wasser sinkt nämlich im Laufe der Zeit der Siedepunkt so weit, daß die Bremsenfunktion gefährdet ist. Diese Alterung hängt von vielen Parametern ab, weshalb das Alter der Flüssigkeit allein keine Rückschlüsse auf den Siedepunkt und damit auf die Brauchbarkeit der Bremsflüssigkeit zuläßt.

Nach einer deutschen Industrienorm ist bereits ein Verfahren bekannt, mit dem der Siedepunkt einer Bremsflüssigkeit auf ca. 3 bis 5 K genau bestimmt werden kann. Dieses Verfahren setzt das Vorhandensein spezieller Laborapparaturen und deren Bedienung durch geschultes Fachpersonal voraus. Außerdem dauert mit diesem Verfahren die Bestimmung des Siedepunktes ca. 20 Minuten, ist also zeitraubend. Für Reihenmessungen in Kraftfahrzeug-Werkstätten ist das Verfahren daher ungeeignet.

Aus der europäischen Patentschrift Nr. 56 424 ist bereits ein Verfahren und eine Vorrichtung zur Bestimmung des Siedepunktes einer Bremsflüssigkeit bekannt, bei dem die Bremsflüssigkeit erhitzt und die zeitliche Temperaturänderung des Heizelementes gemessen wird. Hierzu wird eine Meßsonde, die einen Hohlraum besitzt, in dem ein Heizelement und ein Temperaturfühler angeordnet sind, in die Bremsflüssigkeit vollständig eingetaucht. Der Hohlraum besitzt eine Öffnung zum Einlaß der Bremsflüssigkeit. An die Meßsonde ist eine Anzeige- und Auswerteelektronik angeschlossen, mit der eine Änderung der zeitlichen Temperaturänderung registriert und als Maß für den Siedepunkt der Bremsflüssigkeit ausgewertet werden soll. Der obere Bereich des Hohlraums ist gasdicht ausgebildet und besitzt eine Entlüftungseinrichtung, die nach dem Eintauchen der Sonde und Entweichen der Luft abgesperrt wird.

Nach einem ähnlichen, in der europäischen Patentschrift 74 415 beschriebenen Verfahren wird ebenfalls eine Meßsonde, bestehend aus einem Heizelement und einem Temperaturmeßelement, vollständig in die zu untersuchende Flüssigkeit eingetaucht. Nach dem Einschalten des Heizelementes tritt eine örtliche Verdampfung der Flüssigkeit ein, wobei sichergestellt werden soll, daß die sich bildenden Dampfblasen von dem Heizelement abgeführt werden. Die sich nach dem Einsetzen der Dampfblasenbildung einstellende konstante Temperatur des Heizelementes wird mit Hilfe des Temperaturmeßelements gemessen und dient als Maß für den Siedepunkt der Flüssigkeit.

Es bestehen Zweifel, ob sich mit einem Verfahren nach den beiden vorgenannten europäischen Patenten tatsächlich der Siedepunkt einer Bremsflüssigkeit hinreichend genau bestimmen läßt. Mit beiden Verfahren wird nämlich nicht die Siedetemperatur, sondern direkt oder indirekt die Temperatur des Heizelementes gemessen. Bekanntlich besteht jedoch kein Zusammenhang zwischen der Temperatur des Heizelementes und der Siedetemperatur. Um das Sieden einzuleiten, muß das Heizelement in jedem Fall auf eine Übertemperatur aufgeheizt werden, deren Höhe von zahlreichen Parametern abhängig ist. Vielleicht läßt sich bei genauer Eichung, Beschränkung auf eine bestimmte Flüssigkeit und strenger Einhaltung der Randbedingungen, wie Aufheizgeschwindigkeit, eine mittlere Übertemperatur ermitteln, bei der das Sieden eintritt, und aus dieser eine grobe Unterscheidung in zwei oder drei Siedetemperaturbereiche vornehmen. Für praktische Anwendungen wäre eine solche Messung jedoch zu ungenau.

In der US-Patentschrift Nr. 31 19 250 ist ein Gerät zur kontinuierlichen Siedepunktbestimmung einer Rohlenwasserstoffverbindung, wie Kerosin, beschrieben. Dieses bekannte Gerät (Fig. 1 der US-PS) enthält eine Meßzelle, die über eine Abflußöffnung mit der Umgebung in Verbindung steht, so daß in der Meßzelle der Außendruck herrscht. Außerdem befindet sich in der Meßzelle ein Thermoelement zur Messung der Siedetemperatur. Über einen Kühlmantel wird Kühlmittel herangeführt, um den beim Sieden der zu untersuchenden Flüssiget entstandenen Dampf zu kondensieren. Das Kondensat fließt dann in einen Behälter des Gerätes zurück, in dem sich die zu untersuchende Flüssigkeit und die Aufheizvorrichtung befinden. Solche aufwendigen Geräte eigenen sich höchstens zum Einsatz in Raffinierien.

Der Erfindung liegt daher die Aufgabe zugrunde, die geschilderten Nachteile bekannter Verfahren und Vorrichtungen zu überwinden und ein Verfahren zur Bestimmung der Siedetemperatur einer Flüssigkeit, z.B. einer hygroskopischen Bremsflüssigkeit, zu schaffen, das eine vergleichsweise genaue Bestimmung des Siedepunktes zuläßt und sich mit einer einfachen, leicht zu bedienenden Apparatur durchführen läßt. Die Durchführung der Messung sollte außerdem in möglichst kurzer Zeit zum Ergebnis führen. Auch ein Ungeübter sollte in der Lage sein, die Apparatur zu bedienen.

Es wurde nun herausgefunden, daß sich diese Aufgabe in technisch fortschrittlicher Weise durch ein Verfahren der eingangs genannten Art lösen läßt, dessen Besonderheit darin besteht, daß die Meßzelle derart ausgebildet und in Relation zu der zu untersuchenden Flüssigkeit angeordnet wird, daß sich beim Sieden der Flüssigkeit eine Blasen-Siedezone bzw. Schaum-Siedezone auf der Flüssigkeitsoberfläche und über dieser eine Kondensationszone bilden, daß die kondensierte Flüssigkeit über Abflußöffnungen der Meßzelle aus der Kondensationszone abfließt und daß die Temperatur in der Siedezone unmittelbar über dem Flüssigkeitsspiegel bzw. der Oberfläche der zu untersuchenden Flüssigkeit gemessen wird.

Eine Vorrichtung zur Durchführung dieses Verfahrens ist mit einer Sonde, die eine Meßzelle mit einem Temperaturmeßelement enthält, ausgerüstet und besteht erfindungsgemäß darin, daß die Sonde teilweise, nämlich bis zu einer festgelegten Tiefe, in die zu untersuchende Flüssigkeit eintauchbar ist und eine Zulauföffnung besitzt, durch die Flüssigkeit in die Meßzelle gelangt und einen Flüssigkeitsspiegel direkt unterhalb des Temperaturmeßelementes bildet, sowie daß sich in der Meßzelle oberhalb der Zone, in der die Siedetemperatur meßbar ist, eine Kondensationszone befindet, die über Abflußöffnungen für das Kondensat mit der Umgebung verbunden ist. In der Meßzelle herrscht daher der Außendruck.

Die Erfindung beruht auf der Erkenntnis, daß zum Erzielen eines ausreichend genauen Meßergebnisses tatsächlich die Temperatur der siedenden Flüssigkeit ermittelt werden muß. Sie macht sich dabei die Erkenntnis zunutze, daß bei dem herrschenden Außendruck die Siedetemperatur mit der Dampfsättigungstemperatur identisch ist. Diese Erkenntnis besagt zugleich, daß der Dampf bereits bei einer sehr kleinen Temperaturabnahme kondensiert. Innerhalb von Dampfblasen herrscht Dampfsättigungstemperatur. Damit die Dampfblasen auf dem Weg zur Flüssigkeitsoberfläche nicht kondensieren, muß jeder Ort der gesamten von ihnen durchlaufenen Flüssigkeit eine Temperatur besitzen, die höher ist als die Dampfsättigungstemperatur. Gemessen wird daher erfindungsgemäß in einer Blasen-Siedezone bzw. Schaum-Siedezone, die direkt oberhalb der Flüssigkeitsoberfläche bzw. des Flüssigkeitsspiegels gebildet wird und in der der Außendruck herrscht. Oberhalb dieser Siedezone wird den Siedeblasen so viel Wärme entzogen, daß sie kondensieren. Das Kondensat wird abgeleitet, damit es nicht in den Meßbereich, nämlich in die Siedezone zurückgelangt, das Gleichgewicht in der Siedezone stört und die Messung verfälscht.

Durch die Vorrichtung nach der Erfindung wird ein Quantum der turbulent siedenden Flüssigkeit aus einem größeren Gesamtvolumen der gleichen Flüssigkeit mit im übrigen beliebiger örtlicher Wärmeverteilung gewissermaßen räumlich abgeteilt, ohne die Verbindung zu dem Gesamtvolumen zu unterbrechen. In der Meßzelle bildet sich, wenn die Sonde bis zu einer bestimmten Tiefe in die zu untersuchende Flüssigkeit eingetaucht wird, eine Flüssigkeitsoberfläche oder Flüssigkeitsspiegel, der eine stets gleich definierte relative Raumlage zur Meßzelle und insbesondere zu dem Temperaturmeßelement einnimmt. Das Temperaturmeßelement taucht nicht in Flüssigkeit ein, sondern nur in die Blasen- bzw. Schaum-Siedezone.

Nach einer vorteilhaften Ausführungsart des erfindungsgemäßen Verfahrens wird beim Sieden Flüssigkeit aus einem Gefäß, z.B. einem Probeaufnahmebehälter, zu der Meßzelle nachgeliefert, wobei sich ein Gleichgewicht zwischen dem Verdampfen bzw. der Siedeblasen- oder Siedeschaumbildung, dem Kondensieren, dem Ableiten des Kondensats und der Nachlieferung an frischer Flüssigkeit in die Sonde und damit in die Meßzelle einstellt.

Es ist von besonderem Vorteil, wenn die Meßzelle, einschließlich des Temperaturmeßelementes, durch Wärmeübergang von der zu untersuchenden Flüssigkeit und/oder von den Siedeblasen so weit vorgeheizt wird, daß in der Meßzelle das Gleichgewicht zwischen dem Zu- und Abfließen der Flüssigkeit, der Siedeblasenbildung und dem Kondensieren hergestellt wird. Die Wärmekapazität des Temperaturfühlers wird zweckmäßigerweise an die Masse des Blasenschaums derart angepaßt, daß die Wärmeenergie der Flüssigkeitshüllen der beim Kondensieren zerfallenden Dampfblasen ausreicht, beim Benetzen des Temperaturfühlers diesen mit einem im Mittel konstanten Wärmestrom so nachzuheizen, daß die Temperatur des Dampfblaseninhalts ohne zusätzlichen Wärmeentzug gemessen wird. Diese gemessene Temperatur ist, da in diesem Bereich Außendruck herrscht, mit der Siedetemperatur der untersuchenden Flüssigkeit identisch.

Nach einer vorteilhaften Ausbildung der erfindungsgemäßen Vorrichtung ist die Sonde senkrecht in die Flüssigkeit eintauchbar und die Zulauföffnung der Sonde in Form einer Zulaufbohrung ausgebildet, die an der eingetauchten Stirnseite der Sonde often ist und die der Meßzelle Flüssigkeit senkrecht nach oben zuleitet.

Nach einem weiteren Ausführungsbeispiel der erfindungsgemäßen Vorrichtung sind im Betriebszustand die Zulauföffnung, die Meßzelle und die Kondensationszone senkrecht übereinander angeordnet.

Zweckmäßigerweise ist in der Zulauföffnung oder Zulaufbohrung eine Heizwendel eingefügt, mit der sich die Flüssigkeit, die sich in diesem Bereich befindet, bis zu einem turbulenten Sieden aufheizen läßt.

Nach einem weiteren Ausführungsbeispiel ist die Sonde an einem schwenkbaren Arm angeordnet, durch den elektrische Anschlußdrähte, z.B. für das Temperaturmeßelement, für die Heizwendel usw., hindurchgeführt sind.

Um die definierte relative Lage der Flüssigkeitsoberfläche bzw. des Flüssigkeitsspiegels im Inneren der Meßzelle einzustellen, wird die zu untersuchende Flüssigkeit zweckmäßigerweise in ein Gefäß, dessen Füllhöhe z.B. durch Überlauföffnungen oder Überlaufkanten festgelegt ist, eingebracht und die Eintauchtiefe der Sonde in dieses Gefäß und damit in die Flüssigkeit durch Abstandshalter, z.B. durch eine auf dem Gefäßboden angebrachte Auflage oder einen Höhenanschlag, auf dem die Sonde aufsetzbar ist, vorgegeben.

Weiterhin ist es nach einem Ausführungsbeispiel der Erfindung vorgesehen, das Kondensat aus der Kondensationszone über die Abflußöffnungen in das Gefäß zurückzuleiten.

Eine andere Ausführungsart der erfindungsgemäßen Vorrichtung besteht darin, daß die Sonde in Form eines auf der zu untersuchenden Flüssigkeit schwimmfähigen Körpers ausgebildet ist, der gerade so weit in die Flüssigkeit eintaucht, daß das Temperaturmeßelement beim Sieden der Flüssigkeit die Temperatur in der Blasen- bzw. Schaumsiedezone mißt.

Ferner ist es nach der Erfindung vorgesehen, die Vorrichtung mit einer Vorwärmeinrichtung auszurüsten, mit der die Sonde ganz oder teilweise, vor allem das Temperaturmeßelement und/oder die Kondensationszone der Meßzelle, auf eine Temperatur nahe der Siedetemperatur der zu untersuchenden Flüssigkeiten aufheizbar ist.

Durch das Vorwärmen läßt sich die Meßapparatur auch bei tiefen Außentemperaturen verwenden, ohne daß die Gefahr eines zu schnellen Kondensierens der Siedeblasen in der Kondensationszone und damit eine Störung des Gleichgewichts zwischen der Siedeblasenbildung, dem Kondensieren und der Nachlieferung an frischer Flüssigkeit in die Meßzelle besteht. Ferner wird ein zu langes Aufheizen der in das Probenaufnahmegefäß eingebrachten Flüssigkeit, die untersucht werden soll, und damit ein "Auskochen" der Probe, das die Meßgenauigkeit beeinträchtigen könnte, vermieden.

Nach einer weiteren vorteilhaften Ausführungsart besitzt die Vorrichtung nach der Erfindung eine Schaltungsanordnung mit einer Ablaufsteuerung, die eine Stromquelle zur Versorgung einer Flüssigkeits-Heizeinrichtung, elektronische Schaltungseinheiten zur Verstärkung und Aufbereitung eines mit einem Temperaturmeßelement erzeugten Meßsignales und eine Anzeigeeinheit steuert.

Zusätzlich kann eine solche Schaltungsanordnung einen Siedeplateaudetektor aufweisen, dem das ggf. aufbereitete Ausgangssignal des Temperaturmeßelementes zuführbar ist und der ein – bezogen auf den Start des Meßvorgangs oder das Einschalten der Heizung zeitlich – verzögert ansteigendes Vergleichssignal erzeugt, das mit dem Ausgangssignal des Temperaturmeßelementes verglichen wird und das das Eintreten der Siedephase erkennen läßt. Dabei ist zweckmäßigerweise die Übereinstimmung des Ausgangssignales des Temperaturmeßelmentes mit dem Vergleichssignal als Kriterium für das Eintreten der Siedephase auswertbar und führt zur bezeige der Siedetemperatur sowie zur Beendigung des Meßvorganges.

Weitere Vorteile und Anwendungsmöglichkeiten der Erfindung gehen aus der folgenden Beschreibung von Ausführungsbeispielen anhand der beigefügten Abbildungen hervor.

Es zeigen

Fig. 1 in vereinfachter Darstellung und teilweise im Vertikalschnitt eine an einem schwenkbaren Arm angebrachte, in ein noch leeres Probengefäß eingeschwenkte Sonde gemäß einer Ausführungsart der Erfindung,

Fig. 2 das Ausführungsbeispiel nach Fig. 1 in gleicher Darstellungsweise wie Fig. 1 nach dem Eintauchen der Sonde in die zu untersuchende Flüssigkeit, und zwar vor dem Beginn des Siedens,

Fig. 3 das Ausführungsbeispiel nach Fig. 1 und 2 in gleicher Darstellungsweise, jedoch nach dem Einsetzen des Siedens,

Fig. 4 in gleicher Darstellungsweise wie Fig. 1 und 2 ein weiteres Ausführungsbeispiel der Erfindung, nämlich eine mit einer Vorwärmeinrichtung ausgerüstete Sonde, und

Fig. 5 in Blockdarstellung eine Schaltungsanordnung zur Durchführung des Verfahrens mit Hilfe der Sonden nach den Fig. 1 bis 4.

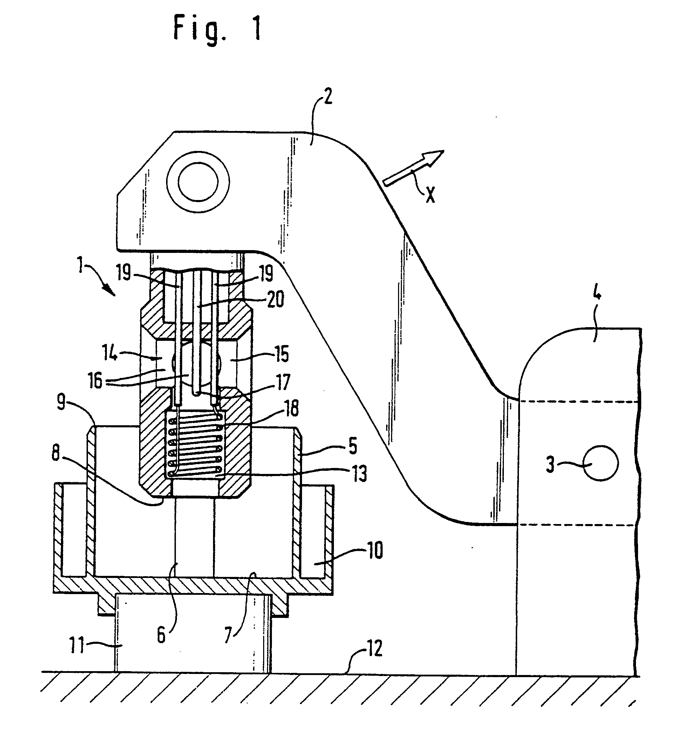

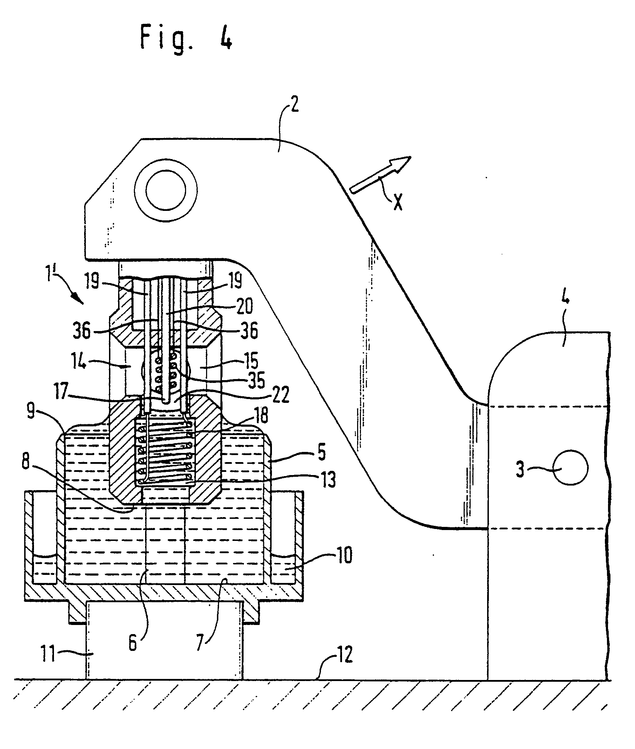

Nach Fig. 1 ist eine Sonde 1 der erfindungsgemäßen Art an einem schwenkbaren Arm 2 befestigt, der drehbar auf einer Welle 3 eines Bremsflüssigkeits-Testgerätes 4 gelagert ist. In diesem nur angedeuteten Testgerät ist u.a. eine elektronische Schaltung (Fig. 4) zur Ablaufsteuerung und Auswertung der Meßsignale, ein Netzgerät zur Stromversorgung der Ablaufsteuerung und zur Aufheizung der zu untersuchenden Flüssigkeit, Anzeigelampen für die Betriebsbereitschaft des Gerätes oder für Störungen sowie ein Feld zur Anzeige der Meß- bzw. Tester-gebnisse untergebracht. Dese Bauteile, die für Geräte solcher Art üblich sind, sind nicht dargestellt.

Fig. 1 zeigt die Betriebsstellung der Sonde 1. Die Sonde 1 ragt senkrecht in ein Probeaufnahmegefäß 5 hinein. Die Eintauchtiefe in die Flüssigkeit bzw. in das Gefäß 5 ist durch einen Höhenanschlag 6 festgelegt, der beispielsweise aus einigen auf dem Gefäßboden 7 abgebrachten Stiften besteht, auf denen die Sonde 1 mit ihrer Stirnfläche 8 aufliegt. Das Gefäß 5 endet oben mit einer überlaufkante 9, über die, wenn die Sonde 1 in das bereits gefüllte Gefäß 5 eingetaucht wird, die verdrängte Flüssigkeit in eine Überlaufkammer 10 am Umfang des Gefäßes 5 gelangen kann.

Eine Meßbecherauflage 11 sorgt für die Ausrichtung des Gefäßes 5 gegenüber dem schwenkbaren Arm 2 und für einen sicheren Halt des Gefäßes 5. Die Auflage 11 ist zweckmäßigerweise auf einer mit dem Testgerät 4 verbundenen Grundplatte 12 befestigt.

In der Sonde 1 befinden sich senkrecht übereinander eine Zulaufbohrung 13, die an der in das Gefäß 5 hineinragenden Stirnseite 8 der Sonde 1 offen ist, und eine Meßzelle 14, zu der die Zulaufbohrung 13 hinführt und deren oberer Teil eine Kondensationszone 15 bildet. Durch horizontale Abflußöffnungen oder -bohrungen 16 in Höhe der Kondensationszone 15 ist die Meßzelle 14 zur Umgebung hin offen.

In die Meßzelle 14 ragt ein Temperaturmeßelement 17 hinein, das beispielsweise aus einem Thermoelement hergestellt ist, dessen sensorisch empfindliche Zone sich an der Spitze des in die Meßzelle hineinragenden Elementes befindet.

In der Zulaufbohrung 13 ist nach Art eines Tauchsieders eine Heizwendel 18 angeordnet, die über durch die Meßzelle 14 hindurchgeführte Anschlußdrähte 19 mit Strom versorgt wird. Die Anschlußdrähte 19 sowie Anschlußdrähte 20 für das Temperaturmeßelement 17 sind, was aus der Abbildung nicht zu ersehen ist, durch den schwenkbaren Arm 2 hindurch zu dem Testgerät 4 hingeführt.

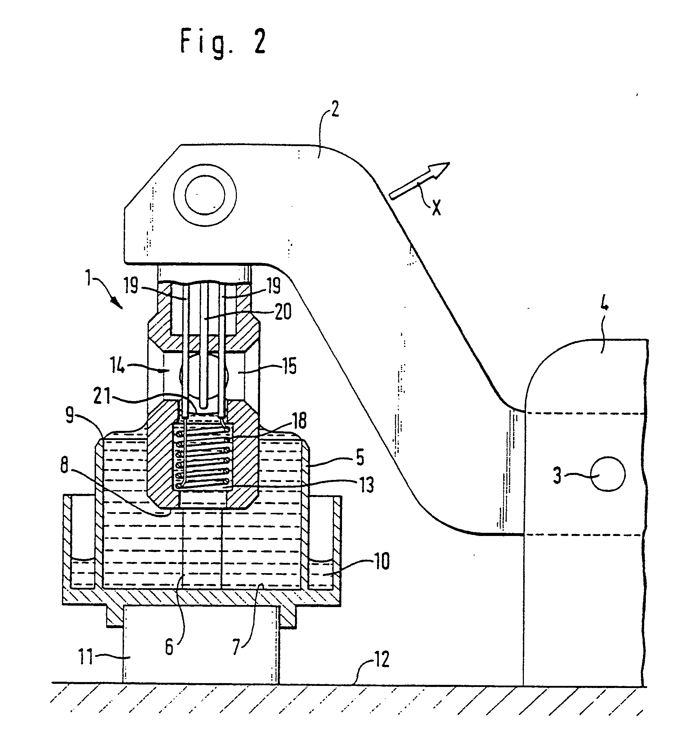

Fig. 2 veranschaulicht den Füllzustand des Probeaufnahmegefäßes 5 und der Sonde 1 vor Beginn der Messung bzw. vor dem Einschalten der Heizwendel 18. Um diesen Füllzustand zu erreichen, wurde zunächst die Sonde 1 durch Verschwenken des Armes 2 in Richtung des Pfeiles X aus dem Gefäß 5 herausgenomien, sodann das Probenaufnahmegefäß 5 randvoll gefüllt und auf der Auflage 11 positioniert. Danach wurde die Sonde 1 in die dargestellte Position zurückgeschwenkt. Die bei dem Eintauchen der Sonde 1 verdrängte Flüssigkeit gelangte in die Überlaufkammer 10. Durch die Zulaufbohrung 13 hindurch stieg dabei der Flüssigkeitsspiegel 21 so weit an, daß sich die erfindungswesentliche relative Raumlage zwischen dem Flüssigkeitsspiegel und dem Temperaturmeßelement 17 einstellte. Der Abstand zwischen der Spitze des Temperaturfühlers 17 und der Flüssigkeitsoberfläche beträgt beispielsweise 1 bis 1,5 mm. Durch Adhäsion der Flüssigkeit an der Wandung im Inneren der Zulaufbohrung 13, deren Durchmesser in dem der Darstellung zugrunde liegenden Ausführungsbeispiel an der Grenzfläche zur Meßzelle ca. 6 mm beträgt, nabm der Flüssigkeitsspiegel 21 die in Fig. 2 gezeigte gewölbte Form an.

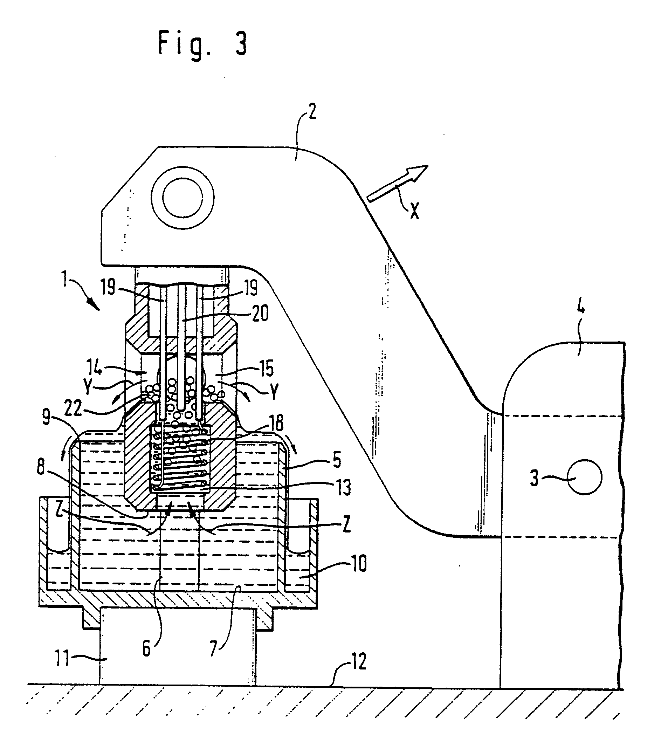

Fig. 3 veranschaulicht die Vorgänge in der Meßzelle nach dem Einsetzen des Siedens. Die in der Nähe der Heizwendel 18 entstehenden Siedeblasen steigen nach oben und bilden oberhalb des Flüssigkeitsspiegels 21 in der Blasen-Siedezone 22 einen Blasenschaum, der über die Flüssigkeitsoberfläche hinaus aufsteigt und den Bereich ausfühlt, in dem sich das Temperaturmeßelement 17 befindet. Oberhalb des Blasenschaums, nämlich in der Kondensationszone 15, lösen sich die Blasen auf. Das Kondensat fließt durch die Abflußbohrungen 16 hindurch in Richtung der Pfeile Y in das Gefäß 5 zurück oder in die Überlaufkammer 10. Durch die Zulaufbohrung 13 fließt frische Flüssigkeit aus dem Gefäß 5 in Richtung zur Meßzelle 14 nach, wie die Pfeile Z veranschaulichen. Durch die Konvektion werden ständig Siedeblasen in die Blasen-Siedezone 22 nachgeliefert.

Die Sonde 1' nach Fig. 4 unterscheidet sich von der anhand der Fig. 1 bis 3 beschriebenen Sonde 1 lediglich durch die Einfügung einer Vorwärmeinrichtung, die in diesem Ausführungsbeispiel durch eine Heizwendel 35 realisiert wurde. Diese Heizwendel 35 wurde auf das Temperaturmeßelement 17 aufgewickelt und ist über elektrische Anschlußdrähte 36, die ebenfalls durch den schwenkbaren Arm 2 hindurch zu dem Testgerät 4 geführt sind, verwirklicht.

Mit einer solchen zusätzlichen Vorwärmeinrichtung (35, 36) läßt sich die Meßzelle, insbesondere das Temperaturmeßelement 17 und die Vorwärmzone 15 auf eine Temperatur nahe der Siedetemperatur der zu messenden Flüssigkeit vorheizen. Dies läßt sich zweckmäßigerweise durch eine kurzzeitige Stromversorgung der Wendel 35 vor dem Starten des eigentlichen Meßvorgandes realisieren. Durch das elektrische Aufheizen mit Hilfe der Heizwendel 35 wird die der aufgeheizten Flüssigkeit und/oder den Siedeblasen entnommene Wärmeenergie relativ gering, was sich auf die Einstellung und den Erhalt des Gleichgewichtszustandes zwischen der Siedeblasenbildung, dem Kondensieren und dem Nachliefern der frischen Flüssigkeit günstig auswirkt. Auch bei der Verwendung von Temperaturmeßelementen mit relativ großer thermischer Masse wird dadurch die Stabilität des Gleichgewichtszustandes begünstigt. Der Aufheizvorgang der Flüssigkeit und damit die für die Messung benötigte Zeit läßt sich durch das Vorwärmen verringern.

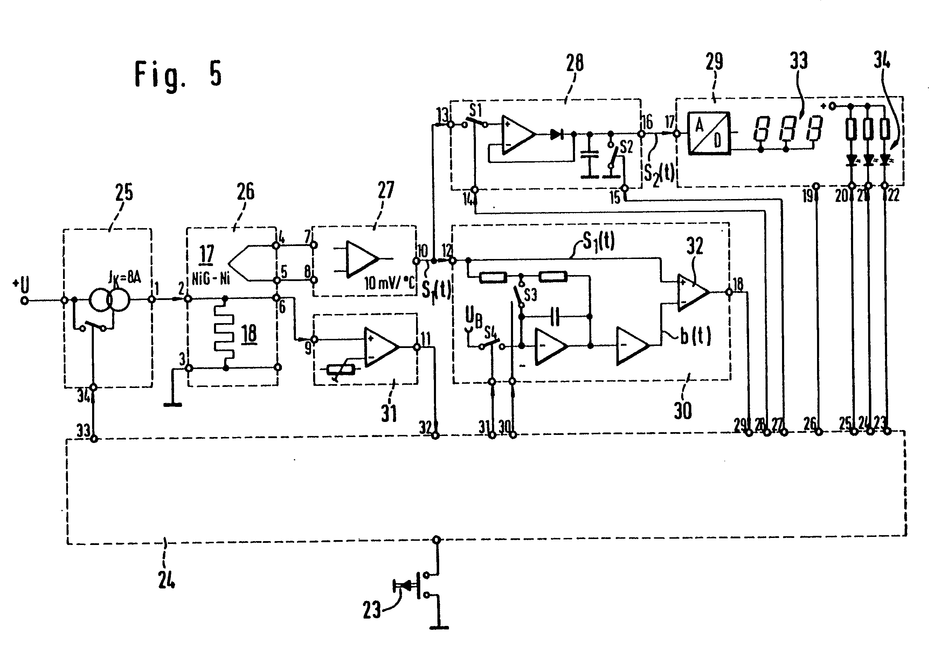

In Fig. 5 ist die Struktur einer elektrischen Schaltung zum Betrieb des Bremsflüssigkeitstestgerätes 4 bzw. zur Steuerung des Meßvorganges dargestellt.

Mit Hilfe einer Starttaste 23 wird ein Meßvorgang in Lauf gesetzt. Der zeitliche Ablauf der einzelnen Funktionen, das Ein- und Ausschalten verschiedener, in Fig. 5 dargestellter elektrischer Funktionsblöcke, die Anzeige des Betriebszustandes des Testgerätes 4 und des Meßergebnisses wird durch einen integrierten Schaltkreis, nämlich durch die Ablaufsteuerung 24, gesteuert. Zur Aufheizung der zu untersuchenden Flüssigkeit bzw. der sich in der Zulaufbohrung 13 befindenden Flüssigkeitsmenge mit Hilfe den Heizwendel 18 ist eine Konstantstromquelle 25 vorhanden. Das Temperaturmeßelement 17, z.B. ein NiCr-Ni-Thermoelement, und die Heizwendel 18 sind in Fig. 5 in einem Block 26 zusammengefaßt. Mit Hilfe eines Meßverstärkers 17 wird das Ausgangssignal des Thermoelementes 17 aufbereitet. Gas Ausgangssignal $S_1(t)$ des Verstärkers 27 wird einem Spitzenspannungsmesser 28 zugeleitet. Der Ausgang dieses Spannungsmessers 28 führt zu einer Anzeigeeinheit 29.

Zum Erkennen der Siedephase ist noch ein Siedeplateaudetektor 30 vorgesehen. Zur Überwachung der Temperatur in der Meßzelle und zur Erkennung einer Übertemperatur dient ein Temperaturwächter 31.

Nach dem Füllen des Probeaufnahmegefäßes 5 und Einschwenken der Sonde 1 wird durch Betätigung der Taste 23 die Konstantstromquelle 25 aktiviert und dadurch die Heizung (18) eingeschaltet. Gleichzeitig wird das Spannungs-Ausgangssignal des Temperaturmeßelementes 17 dem Meßverstärker 27 zugeleitet und dessen Ausgangssignal $S_1(t)$ zweifach ausgewertet. Zum einen wird es mit einem innerhalb des Siedeplateaudetektors erzeugten Signal b(t) verglichen, das zur schnellen Erkennung der Siedephasen dient. Hierzu wird nach dem Starten des Aufheizvorganges innerhalb des Siedeplateaudetektors 30 ein zeitverzögert einsetzendes, rampenartig über der Zeit anwachsendes Vergleichssignal b(t) bzw. eine Vergleichsspannung erzeugt. Die Zeitverzögerung und die Steilheit des ansteigenden Signals b(t) sind so gewählt, daß in allen in der Praxis vorkommenden Fällen, ausgehend von einer beliebigen Vortemperatur der zu untersichenden Flüssigkeit, die Meßsignalspannung $S_1(t)$ am Ausgang des Verstärkers 27 das Siedeplateau zeitlich vor der Vergleichsspannung b(t) erreicht.

Da das Temperaturmeßsignal $S_1(t)$ nach dem Erreichen der Siedetemperatur praktisch konstant bleibt und während der Aufheizphase die Zeitverzögerung des Vergleichssignals b(t) wirksam war, nähert sich nach dem Einsetzen der Siedephase – wenn keine technische Störung vorliegt – die Vergleichsspannung b(t) zeitverzögert dem Meßsignal bzw. der Meßspannung $S_1(t)$ an und erreicht schließlich eine kurze Zeit später das Niveau der Signalspannung. Diese Spannungsgleichheit wird von einem Vergleicher 32 im Inneren des Siedeplateaudetektors 30 erkannt und als Kriterium für das Erreichen der Siedephase ausgewertet. Tritt diese Spannungsgleichheit nach einer vorgesehenen Maximalzeit nicht ein, läßt dies auf einen Fehler schließen. Über die Ablaufsteuerung wird in einem solchen Fall der Meßvorgang beendet und der Fehler zur Anzeige gebracht.

Zum anderen, d.h. neben der Auswertung zur Siedephaseerkennung in dem Detektor 30, wird das Ausgangssignal $S_1(t)$ dem Spannungsmesser 28 zugeführt und dient zur Siedetemperaturbestimmung. Dies geschieht über eine Spitzenspannungsmessung in dem Spannungsmesser 28 und durch Umformung und Anzeige des Ausgangssignals $S_2(t)$ dieses Spannungsmessers 28 mit Hilfe des dreistelligen Anzeigefeldes 33 der Anzeigeeinheit 29. Die symbolisch dargestellten, verschiedenfarbigen Leuchtdioden 34 innerhalb der Anzeigeeinheit 29 signalisieren durch Aufleuchten der entsprechenden Diode die Betriebsbereitschaft, die Durchführung eines Meßvorganges oder das Auftreten eines Fehlers.

Durch den beschriebenen Siedeplateaudetektor 30 wird also das Erreichen der Siedephase schnell erkannt, die Anzeige und das Festhalten der Anzeige der Siedetemperatur ausgelöst und der Aufheizvorgang der zu untersuchenden Flüssigkeit beendet. Dadurch wird ein unnötig langes Aufheizen der Probe und dadurch ein "Herauskochen" des Wassers aus der Probe sowie eine entsprechende Meßwertverfälschung vermieden.

Der Siedeplateaudetektor 30 kann außerdem zur Steuerung der Vorwärmeinrichtung – siehe Fig. 4 und die zugehörige Erläuterung – herangezogen werden. Hierzu wird, wenn das Temperaturmeßelement 17 zum Zeitpunkt des Startens der Ablaufsteuerung das Unterschreiten einer Mindest-Probentemperatur signalisiert, die Vorwärmeinrichtung aktiviert.

Andererseits ist es auch möglich, die Vorwärmtemperatur durch Messung des elektrischen Widerstandes der Heizwendel 35 zu bestimmen und zu steuern. Eine weitere Ausführungsform der Erfindung besteht darin, daß jedem Meßvorgang grundsätzlich zunächst eine kurze Vorwärmphase vorausgeht. Die Höhe der durch das Vorwärmen erreichten Temperatur ist von untergeordneter Bedeutung, weil sich bei dem anschließenden Meßvorgang die zur Ausbildung des Gleichgewichts erforderliche Temperatur durch Wärmeübergang von den Siedeblasen auf das Temperaturmeßelement oder durch Abkühlung durch die kondensierenden Siedeblasen selbsttätig einstellt.

## Ansprüche

1. Verfahren zur Bestimmung der Siedetemperatur einer Flüssigkeit, z.B. einer hygroskopischen Hydraulikflüssigkeit, mit Hilfe einer Meßzelle, die mit der Umgebung verbunden ist und die ein Temperaturmeßelement enthält, dadurch **gekennzeichnet**, daß die Meßzelle (14) derart ausgebildet und in Relation zu der zu untersuchenden Flüssigkeit angeordnet wird, daß sich beim Sieden der Flüssigkeit eine Blasen-Siedezone bzw. Schaum-Siedezone (22) auf der Flüssigkeitsoberfläche (21) und über dieser eine Kondensationszone (15) bilden, daß die kondensierte Flüssigkeit über Abflußöffnungen (16) der Meßzelle aus der Kondensationszone (15) abfließt und daß die Temperatur in der Siedezone (22) unmittelbar über dem Flüssigkeitsspiegel bzw. der Oberfläche der zu untersuchenden Flüssigkeit gemessen wird.

2. Verfahren nach Anspruch 1, dadurch **gekennzeichnet**, daß beim Sieden der zu untersuchenden Flüssigkeit aus einem Gefäß (5) Flüssigkeit zu der Meßzelle (14) nachgeliefert wird, wobei sich ein Gleichgewicht zwischen dem Verdampfen bzw. der Siedeblasen- oder Siedeschaumbildung, dem Kondensieren, dem Ableiten des Kondensats und der Nachlieferung an Flüssigkeit einstellt.

3. Verfahren nach Anspruch 1 oder 2, dadurch **gekennzeichnet**, daß die Meßzelle (14), einschließ-

lich des Temperatureßelementes (17), durch Wärmeübergang von der zu untersuchenden Flüssigkeit und/oder von den Siedeblasen so weit vorgeheizt wird, daß sich in der Meßzelle (14) das Gleichgewicht zwischen dem Zu- und Abfließen der Flüssigkeit, der Siedeblasenbildung und dem Kondensieren einstellt.

4. Vorrichtung zum Durchführen des Verfahrens nach einem der Ansprüche 1 bis 3, mit einer Sonde, die eine Meßzelle aufweist, welche mit der Umgebung verbunden ist und die ein Temperatureßelement enthält, dadurch **gekennzeichnet**, daß die Sonde (1, 1') teilweise, nämlich bis zu einer festgelegten Tiefe, in die zu untersuchende Flüssigkeit eintauchbar ist und eine Zulauföffnung (13) besitzt, durch die Flüssigkeit in die Meßzelle (14) gelangt und einen Flüssigkeitsspiegel (21) direkt unterhalb des Temperatureßelementes (17) bildet, sowie daß sich in der Meßzelle (14) oberhalb der Zone (22), in der die Siedetemperatur meßbar ist, eine Kondensationszone (15) befindet, die über Abflußöffnungen (16) für das Kondensat mit der Umgebung verbunden ist.

5. Vorrichtung nach Anspruch 4, dadurch **gekennzeichnet**, daß die Sonde (1, 1') senkrecht in die zu untersuchende Flüssigkeit eintauchbar ist und daß die Zulauföffnung (13) in Form einer Zulaufbohrung ausgebildet ist, die an der eingetauchten Stirnseite (8) der Sonde (1, 1') offen ist und die die zu untersuchende Flüssigkeit senkrecht nach oben der Meßzelle (14) zuleitet.

6. Vorrichtung nach Anspruch 4 oder 5, dadurch **gekennzeichnet**, daß im Betriebszustand die Zulauföffnung (13), die Meßzelle (14) und die Kondensationszone (15) senkrecht übereinander angeordnet sind.

7. Vorrichtung nach einem der Ansprüche 4 bis 6, dadurch **gekennzeichnet**, daß in die Zulauföffnung (13) ein Heizelement, z.B. eine Heizwendel (18), eingefügt ist.

8. Vorrichtung nach einem der Ansprüche 4 bis 7, dadurch **gekennzeichnet**, daß die Sonde (1, 1') an einem schwenkbaren Art (2) angeordnet ist, durch den elektrische Anschlußdrähte (19, 20), z.B. für das Temperatureßelement (17), für die Heizung usw., hindurchgeführt sind.

9. Vorrichtung nach einem der Ansprüche 4 bis 8, dadurch **gekennzeichnet**, daß sich die zu untersuchende Flüssigkeit in einem Gefäß (5) mit festgelegter Füllhöhe befindet und daß die Eintauchtiefe der Sonde (1, 1') in das Gefäß (5) bzw. in die Flüssigkeit durch Abstandshalter (6), z.B. durch eine auf dem Gefäßboden (7) angebrachte Auflage oder einen Höhenanschlag, auf den die Sonde aufsetzbar ist, vorgegeben ist.

10. Vorrichtung nach Anspruch 9, dadurch **gekennzeichnet**, daß die Füllhöhe des Gefäßes (5) durch Überlaufkanten (9), Überlauföffnungen oder dergl. festgelegt ist.

11. Vorrichtung nach Anspruch 9 oder 10, dadurch **gekennzeichnet**, daß das Kondensat aus der Kondensationszone (15) über die Abflußöffnungen (16) in das Gefäß (5) zurückleitbar ist.

12. Vorrichtung nach einem der Ansprüche 4 bis 8, dadurch **gekennzeichnet**, daß die Sonde (1, 1') in Form eines auf der zu untersuchenden Flüssigkeit schwimmfähigen Körpers ausgebildet ist, der gerade so weit in die Flüssigkeit eintaucht, daß das Temperatureßelement (17) beim Sieden der Flüssigkeit die Temperatur in der Siedezone (22) ermittelt.

13. Vorrichtung nach einem der Ansprüche 4 bis 12, dadurch **gekennzeichnet**, daß diese mit einer Vorwärmeinrichtung (35, 36) ausgerüstet ist, mit der die Sonde (1, 1') ganz oder teilweise auf eine Temperatur nahe der Siedetemperatur der zu untersuchenden Flüssigkeit aufheizbar ist.

14. Vorrichtung nach Anspruch 13, dadurch **gekennzeichnet**, daß mit der Vorwärmeinrichtung (35, 36) die Meßzelle (14), insbesondere das Temperatureßelement (17) und/oder die Kondensationszone (15), aufheizbar sind.

15. Vorrichtung nach Anspruch 13 oder 14, dadurch **gekennzeichnet**, daß die Vorwärmeinrichtung in Form einer Heizwendel (35), die ein durch die Kondensationszone (15) in die Siedeblasenzone (22) hineinragendes Temperatureßelement (17) umgibt, ausgebildet ist.

16. Vorrichtung nach Anspruch 14 oder 15, dadurch **gekennzeichnet**, daß zur Messung der Siedetemperatur ein elektrisch aufheizbares und dadurch vorerwärmbares Temperatureßelement (17) vorgesehen ist.

17. Vorrichtung nach einem der Ansprüche 4 bis 16, dadurch **gekennzeichnet**, daß diese eine Schaltungsanordnung mit einer Ablaufsteuerung (24) besitzt, die eine Stromquelle (25) zur Versorgung der Heizeinrichtung (18), elektronische Schaltungseinheiten (27, 28) zur Verstärkung und Aufbereitung eines mit einem Temperatureßelement (17) erzeugten Meßsignals und eine Anzeigeeinheit (29) steuert.

18. Vorrichtung nach Anspruch 17, dadurch **gekennzeichnet**, daß diese einen Siedeplateaudetektor (30) aufweist, dem das ggf. aufbereitete Ausgangssignal des Temperatureßelementes (17) zuführbar ist und der ein – bezogen auf die Einleitung eines Meßvorgangs oder die Einschaltung der Heizeinrichtung (18) – zeitlich verzögert ansteigendes Vergleichssignal b(t) erzeugt, das mit dem Ausgangssignal des Temperatureßelementes (17) verglichen wird und dadurch das Eintreten der Siedephase erkennen läßt.

19. Vorrichtung nach Anspruch 17 oder 18, dadurch **gekennzeichnet**, daß die Übereinstimmung des Ausgangssignals des Temperatureßelementes (17) mit dem in dem Siedeplateaudetektor (30) erzeugten Vergleichssignals b(t) als Kriterium für das Eintreten der Siedephase auswertbar ist und die Anzeige der Siedetemperatur sowie die Beendigung des Meßvorganges herbeiführt.

## Claims

1. A method for determining the boiling temperature of a liquid, e.g. a hygroscopic hydraulic fluid, by means of a measurement cell which connects to its surroundings and contains a temperature measuring element, **characterized** in that the measurement cell (14) is designed such and is arranged such in relation to the liquid to be tested that, on boiling of the liquid, a bubbling ebullition zone or foaming ebullition zone (22), respectively, is formed on the liquid surface (21) and, on top thereof, a condensation zone (15) is formed, in that the condensed liquid flows off from the condensation zone (15) through discharge openings (16) of the measurement cell, and in that the temperature in the ebullition zone (22) is measured directly above the liquid level, that is the surface of the liquid to be tested.

2. A method as claimed in claim 1, **characterized** in that, on boiling of the liquid to be tested, liquid out of a receptacle (5) is replenished to the measurement cell (14), a balance being established between the evaporation or, respectively, the formation of boiling bubbles or boiling foam, the condensation, the discharge of the condensate and the replenishment of liquid.

3. A method as claimed in claim 1 or 2, **characterized** in that the measurement cell (14) including the temperature measuring element (17) is preheated by heat transfer from the test liquid and/or the boiling bubbles to such an extent as to establish in the measurement cell (14) the balance between the delivery and discharge of the liquid, the formation of boiling bubbles and the condensation.

4. A device for implementing this method as claimed in any one of the claims 1 to 3, furnished with a probe comprising a measurement cell which is connected to its surroundings and contains a temperature measuring element, **characterized** in that the probe (1, 1') can be immersed partly into the liquid to be tested, namely until a predefined depth is reached, and in that it contains a supply opening (13), through which liquid enters the measurement cell (14) and forms a liquid level (21) directly beneath the temperature measuring element (17), as well as in that there is a condensation zone (15) in the measurement cell (14) above the zone (22) in which the boiling temperature can be measured, which condensation zone is connected with the atmosphere via discharge openings (16) for the condensate.

5. A method as claimed in claim 4, **characterized** in that the probe (1, 1') can be immersed vertically into the test liquid, and in that the supply opening (13) is designed in the form of a supply bore which is open on the immersed front face (8) of the probe (1, 1') and which delivers the test liquid vertically upwards to the measurement cell (14).

6. A device as claimed in claim 4 or 5, **characterized** in that in the operating condition, the supply opening (13), the measurement cell (14) and the condensation zone (15) are arranged vertically on top of one another.

7. A device as claimed in any one of the claims 4 to 6, **characterized** in that a heating element, e.g. a heater coil (18), is inserted into the supply opening (13).

8. A device as claimed in any one of the claims 4 to 7, **characterized** in that the probe (1, 1') is arranged at a tiltable arm (2) extending through which are electric junction wires (19, 20), for instance for the temperature measuring element (17), for the heating etc.

9. A device as claimed in any one of the claims 4 to 8, **characterized** in that the test liquid is contained in a receptacle (5) having a predefined filling height, and in that the depth of immersion of the probe (1, 1') into this receptacle (5), that is to say into the liquid, is predetermined by range spacers (6), for example by a support mounted on the receptacle's bottom (7) or by a level-defining stop on which the probe can be seated.

10. A device as claimed in claim 9, **characterized** in that the filling height of the receptacle (5) is determined by overflow edges (9), overflow openings or the like.

11. A device as claimed in claim 9 or 10, **characterized** in that the condensate can be returned from the condensation zone (15) through the discharge openings (16) into the receptacle (5).

12. A device as claimed in any one of the claims 4 to 8, **characterized** in that the probe (1, 1') is designed in the shape of an element floatable on the test liquid and immersing into the said liquid just about so far that the temperature measuring element (17) will ascertain the temperature in the ebullition zone (22) on ebullition of the liquid.

13. A device as claimed in any one of the claims 4 to 12, **characterized** in that said is equipped with a preheating device (35, 36) allowing to heat up the probe (1, 1') completely or partly to a temperature near the boiling temperature of the test liquid.

14. A device as claimed in claim 13, **characterized** in that the preheating device (35, 36) allows to heat up the measurement cell (14), in particular the temperature measuring element (17) and/or the condensation zone (15).

15. A device as claimed in claim 13 or 14, **characterized** in that the preheating device is designed in the form of a heater coil (35) which encompasses a temperature measuring element (17) projecting through the condensation zone (15) into the bubbling ebullition zone (22).

16. A device as claimed in claim 14 or 15, characterized in that an electrically heatable and thereby preheatable temperature measuring element (17) is provided for measuring the boiling temperature.

17. A device as claimed in any one of the claims 4 to 16, **characterized** in that said device comprises a circuit configuration with a sequence control (24) which controls a current source (25) for the supply of the heating device (18), electronic circuitries (27, 28) for the amplification and the processing of a test signal produced by means of a temperature measuring element (17), as well as an indicator (29).

18. A circuit configuration as claimed in claim 17, **characterized** in that said comprises a boiling level detector (30) which can be supplied with the possibly processed output signal of the temperature measuring element (17) and which produces a comparison signal b(t) rising with time delay – in relation to the commencement of a measuring action or the switching-on of the heating device (18) – which comparison signal is compared with the output signal of the temperature measuring element (17) and which thereby permits to recognize the beginning of the ebullition phase.

19. A circuit configuration as claimed in claim 17 or 18, **characterized** in that the coincidence of the output signal of the temperature measuring element (17) with the comparison signal b(t) produced in the boiling level detector (30) can be rated as a criterion for the beginning of the ebullition phase and results in the indication of the boiling temperature as well as the termination of the measuring action.

## Revendications

1. Procédé pour déterminer la température d'ébullition d'un liquide, par exemple d'un fluide hydraulique hygroscopique, à l'aide d'une cellule de mesure qui est reliée à l'environnement et contient un élément de mesure de la température, caractérisé en ce que la cellule de mesure (14) est disposée par rapport au liquide devant être étudié, de manière que, lors de l'ébullition du liquide, il se forme une zone d'ébullition avec des bulles ou une zone d'ébullition avec de la mousse (22) sur la surface (21) du liquide, et, au-dessus de cette zone, une zone de condensation (15), que le liquide condensé sort de la zone de condensation (15) en passant par des ouvertures d'évacuation (16) de la cellule de mesure et qu'on mesure la température dans la zone d'ébullition (22) directement au-dessus du plan du liquide ou de la surface du liquide à étudier.

2. Procédé selon la revendication 1, caractérisé en ce que lors de l'ébullition du liquide à étudier, du liquide est envoyé complémentairement depuis un récipient (5) à la cellule de mesure (14), auquel cas il s'établit un équilibre entre l'évaporation ou la formation de bulles ou de mousse par ébullition, la condensation, l'évacuation du condensat et l'envoi complémentaire de liquide.

3. Procédé selon la revendication 1 ou 2, caractérisé en ce que la cellule de mesure (14) y compris l'élément (17) de mesure de la température est réchauffée par transfert thermique à partir du liquide à examiner et/ou à partir des bulles produites par ébullition, au point qu'il s'établit dans la cellule de mesure (14) un équilibre entre l'apport et l'évacuation du liquide, la formation des bulles par ébullition et la condensation.

4. Dispositif pour la mise en oeuvre du procédé selon l'une des revendications 1 à 3, comportant une sonde, qui comporte une cellule de mesure, qui est reliée à l'environnement et contient un élément de mesure de la température, caractérisé en ce que la sonde (1, 1') peut être immergée en partie, c'est-à-dire jusqu'à une profondeur fixée, dans le liquide devant être étudié, et possède une ouverture d'admission (13), par laquelle le liquide parvient dans la cellule de mesure (14) et forme un plan de liquide (21) directement au-dessous de l'élément (17) de mesure de la température, et qu'au-dessus de la zone (22), dans laquelle la température d'ébullition est mesurable, est située, dans la cellule de mesure (14), une zone de condensation (15), qui est reliée à l'environnement par l'intermédiaire d'ouvertures (16) d'évacuation pour le condensat.

5. Dispositif selon la revendication 4, caractérisé en ce que la sonde (1, 1') peut être immergée verticalement dans le liquide à étudier et que l'ouverture d'admission (13) est agencée sous la forme d'un perçage d'admission, qui est ouvert sur le côté frontal immergé (8) de la sonde (1, 1') et introduit le liquide à étudier verticalement vers le haut en direction de la cellule de mesure (14).

6. Dispositif selon la revendication 4 ou 5, caractérisé en ce que, dans l'état de fonctionnement, l'ouverture d'admission (13), la cellule de mesure (14) et la zone de condensation (15) sont superposées verticalement.

7. Dispositif selon l'une des revendications 4 à 6, caractérisé en ce qu'un élément de chauffage, par exemple un filament chauffant (18), est inséré dans l'ouverture d'admission (13).

8. Dispositif selon l'une des revendications 4 à 7, caractérisé en ce que la sonde (1, 1') est disposée sur un bras pivotant (2), que traversent des fils électriques de raccordement (19, 20), prévus par exemple pour l'élément (17) de mesure de la température, pour le chauffage, etc.

9. Dispositif selon l'une des revendications 4 à 8, caractérisé en ce que le liquide à étudier est situé dans un récipient (5) possédant une hauteur de remplissage fixée et que la profondeur d'immersion de la sonde (1, 1') dans le récipient (5) ou dans le liquide est prédéterminée par une entretoise (6), par exemple au moyen d'un support disposé sur le fond (7) du récipient ou d'une butée de réglage en hauteur, sur laquelle la sonde peut être placée.

10. Dispositif selon la revendication 9, caractérisé en ce que la hauteur de remplissage du récipient (5) est déterminée par des bords de trop-plein (9), des ouvertures de trop-plein ou analogues.

11. Dispositif selon la revendication 9 ou 10, caractérisé en ce que le condensat peut être renvoyé depuis la zone de condensation (15) dans le récipient (5) par l'intermédiaire des ouvertures d'évacuation (16).

12. Dispositif selon l'une des revendications 4 à 8, caractérisé en ce que la sonde (1, 1') est agencée sous la forme d'un corps, qui est apte à flotter sur le liquide à étudier et est immergé dans ce liquide à une profondeur précisément telle que l'élément (17) de mesure de la température détermine, lors de l'ébullition du liquide, la température dans la zone d'ébullition (22).

13. Dispositif selon l'une quelconque des revendications 4 à 12, caractérisé en ce que ce dispositif est équipé d'un dispositif de préchauffage (35, 36), à l'aide duquel la sonde (1, 1') peut être chauffée en totalité ou en partie à une température proche de la température d'ébullition du liquide à étudier.

14. Dispositif selon la revendication 13, caractérisé en ce que la cellule de mesure (14), notamment l'élément (17) de mesure de la température et/ou la zone de condensation (15), peuvent être chauffés par le dispositif de préchauffage (35, 36).

15. Dispositif selon la revendication 13 ou 14, caractérisé en ce que le dispositif de préchauffage est réalisé sous la forme d'un filament (35), qui entoure un élément (17) de mesure de la température qui pénètre dans la zone de condensation (15) à l'intérieur de la zone (22) des bulles formées par ébullition.

16. Dispositif selon la revendication 14 ou 15, caractérisé en ce que pour la mesure de la température d'ébullition, il est prévu un élément (17) de mesure de la température pouvant être chauffé électriquement et pouvant être de ce fait préchauffé.

17. Dispositif selon l'une des revendications 4 à 16, caractérisé en ce que ce dispositif contient un montage comportant un dispositif de commande d'exécution (24), qui commande une source de courant (25) servant à alimenter le dispositif de chauffage (18), des unités de circuits électroniques (27, 28) servant à amplifier et préparer un signal de mesure produit par un élément (17) de mesure de la température et une unité d'affichage (29).

18. Dispositif selon la revendication 17, caractérisé en ce que ce dispositif comporte un détecteur (30) du plateau d'ébullition, auquel peut être envoyé le signal de sortie, éventuellement préparé, de l'élément (17) de mesure de la température et qui produit un signal de comparaison b(t) qui augmente d'une manière retardée – par rapport au déclenchement d'une opération de mesure ou au branchement du dispositif de chauffage (18) –, est comparé au signal de sortie de l'élément (17) de mesure de la température et permet d'identifier, de ce fait, l'apparition de la phase d'ébullition.

19. Dispositif selon la revendication 17 ou 18, caractérisé en ce que la coïncidence entre le signal de sortie de l'élément (17) de mesure de la température et le signal de comparaison b(t) produit dans le détecteur (30) du plateau d'ébullition peut être évaluée en tant que critère pour l'apparition de la phase d'ébullition, et déclenche l'affichage de la température d'ébullition ainsi que la fin de l'opération de mesure.

# Fig. 1

Fig. 2

Fig. 3

# Fig. 4

# Fig. 5

EP 0 289 499 B1